# EUROPÄISCHE PATENTSCHRIFT

(11) **EP 3 812 739 B1**
(45) Veröffentlichungstag und Bekanntmachung des Hinweises auf die Patenterteilung: **03.07.2024**
(21) Anmeldenummer: 20200873.6
(22) Anmeldetag: 08.10.2020
(51) Int. Cl.: G01N 17/00, B65D 88/00, B32B 5/18, B32B 7/12, B32B 15/04, B32B 15/095, B32B 15/18, B32B 27/40, B65D 81/38

(54) **VERFAHREN ZUR AUSBILDUNG EINER THERMISCH ISOLIERENDEN SANDWICHKONSTRUKTION UND KLIMASCHRANK**
METHOD OF FORMING A THERMALLY INSULATING SANDWICH CONSTRUCTION AND CLIMATIC CHAMBER
PROCÉDÉ DE FORMATION D'UNE CONSTRUCTION SANDWICH THERMOISOLANTE ET ARMOIRE DE CLIMATISATION

(30) Priorität: 25.10.2019 DE 102019128829
(43) Veröffentlichungstag der Anmeldung: 28.04.2021
(73) Patentinhaber: Binder GmbH, 78532 Tuttlingen (DE)
(72) Erfinder: Winkler, Hartmut, 78532 Tuttlingen (DE); Seligmann, Nina, 78652 Deißlingen (DE); Husseck, Mario, 78050 Villingen-Schwenningen (DE); Moll, Jan, 78166 Donaueschingen (DE)
(74) Vertreter: Westphal, Mussgnug & Partner Patentanwälte mbB

(56) Entgegenhaltungen:
- DE-A1-102011 077 366
- US-A1- 2014 367 393

## Beschreibung

Die vorliegende Erfindung betrifft ein Verfahren zur Ausbildung einer thermisch isolierenden Sandwichkonstruktion, insbesondere einer Sandwichkonstruktion eines Gehäuses eines Klimaschranks für den Hochtemperaturbereich mit den Merkmalen des Anspruchs 1 sowie einen Klimaschrank für den Hochtemperaturbereich mit den Merkmalen des Patentanspruchs 8. Klimaschränke sind aus dem Stand der Technik in unterschiedlichen Ausgestaltungen vorbekannt und werden in wissenschaftlichen Laboren oder im industriellen Einsatz zur Simulation von biologischen, chemischen und/oder physikalischen Umwelteinflüssen, wie beispielsweise Temperatur, Luftdruck und/oder Luftfeuchtigkeit verwendet. Ein Klimaschrank umfasst einen Innenraum und ein Gehäuse, wobei der Innenraum in dem Gehäuse angeordnet ist und in dem Innenraum die biologischen, chemischen und/oder physikalischen Umwelteinflüsse simuliert werden. Klimaschränke, insbesondere Konstantklimaschränke, für den Hochtemperaturbereich werden zur Simulation von Temperaturen zwischen -10°C bis zu 350°C verwendet.

Aus dem Stand der Technik ist eine Vielzahl von Verfahren zur Ausbildung einer thermisch isolierenden Sandwichkonstruktion vorbekannt. Die durch diese bekannten Verfahren hergestellten thermisch isolierenden Sandwichkonstruktionen können zur Bildung eines thermisch isolierenden Gehäuses eines Klimaschranks verwendet werden, wobei das Gehäuse eine dem Innenraum zugewandte Innenwandung und eine Außenwandung aufweist. Zum Herstellen einer stabilen Sandwichkonstruktion wird in einen zwischen der Innenwandung und der Außenwandung ausgebildeten Hohlraum ein herkömmlicher 2-Komponenten-PUR-Schaum eingebracht, der bei ausreichender Dosierung den zur Verfügung stehenden Hohlraum vollständig ausfüllt, aushärtet und die Innenwandung und die Außenwandung verbindet. Durch diese Verbindung zwischen der Außenwandung und der Innenwandung wird eine robuste Sandwichkonstruktion gebildet, die aufgrund der physikalischen Eigenschaften, insbesondere des ausgehärteten PUR-Schaums, gute thermisch isolierende Eigenschaften, also eine sehr geringe Wärmeleitfähigkeit aufweist.

Als druckschriftlicher Stand der Technik werden die DE 2011 077 366 A1 und die US 2014 / 367 393 A1 genannt.

Als Nachteil an dem Stand der Technik ist zu nennen, dass herkömmliche 2-Komponenten-PUR-Schäume eine geringe Wärmebeständigkeit aufweisen, wodurch derartige Sandwichkonstruktionen einen maximalen Einsatzbereich von bis zu 120°C (393 K) aufweisen und somit nicht für die Verwendung in Konstantklimaschränken mit einem Temperaturbereich von über 120°C, vorzugsweise mit einem Temperaturbereich bis zu 350°C, geeignet sind.

Hier setzt die vorliegende Erfindung an.

Es ist die Aufgabe der vorliegenden Erfindung, ein verbessertes Verfahren zur Erzeugung einer Sandwichkonstruktion, insbesondere einer Sandwichkonstruktion eines Gehäuses eines Klimaschranks vorzuschlagen, das in zweckmäßiger Weise die bisher bekannten Verfahren verbessert und ein neuartiges Verfahren bereitstellt, dass die Herstellung einer sehr stabilen Sandwichkonstruktion mit einer geringen Wärmeleitfähigkeit ermöglicht. Darüber hinaus soll das Verfahren eine kostenoptimierte Herstellung der Sandwichkonstruktion ermöglichen.

Diese Aufgaben werden durch ein Verfahren mit den Merkmalen des Patentanspruchs 1, durch eine Sandwichkonstruktion mit den Merkmalen des Patentanspruchs 7 und durch einen Klimaschrank mit den Merkmalen des Patentanspruchs 8 gelöst. Weitere vorteilhafte Ausgestaltungen der Erfindung werden in den Unteransprüchen angegeben.

Das erfindungsgemäße Verfahren mit den Merkmalen des Patentanspruchs 1 zur Ausbildung einer thermisch isolierenden Sandwichkonstruktion, insbesondere einer Sandwichkonstruktion eines Gehäuses eines Klimaschranks für den Hochtemperaturbereich, mit einer Innenwandung und einer Außenwandung weist folgende Verfahrensschritte auf:
- Bereitstellen der Innenwandung;
- Aufkleben mindestens einer hochtemperaturbeständigen Isolierplatte auf der Innenwandung;
- Positionieren der Außenwandung zu der Innenwandung derart, dass zwischen der Innenwandung und der Außenwandung die mindestens eine temperaturbeständige Isolierplatte und ein Hohlraum ausgebildet ist, und
- Ausschäumen des Hohlraums mit einem PUR-Schaum zur Bildung einer die mindestens eine temperaturbeständige Isolierplatte und die Außenwandung verbindende zweiten Hartschaumschicht.

Nachfolgend wird hier und im Zusammenhang mit der erfindungsgemäßen Lehre unter einer Hochtemperatur eine Temperatur verstanden, die über einen längeren Zeitraum oder auch dauerhaft auf die verwendeten Werkstoffe einwirkt. Im Zusammenhang mit dieser Erfindung beträgt eine solche Temperatur mindestens 120°C. Weiterhin bevorzugt beträgt die Hochtemperatur im Zusammenhang mit dieser Erfindung mindestens 180°C, 250°C oder sogar bis zu 350°C.

Weiterhin wird hier und im Nachfolgenden unter einer Innenwandung die Wandung, die Schicht oder die Seite eines Gehäuses, welche bei einer bestimmungsgemäßen Verwendung durch die Hochtemperatur unmittelbar thermisch belastet wird, und unter einer Außenwandung die Wandung, die Schicht oder die Seite des Gehäuses verstanden, die mit der Umgebung kommuniziert, wodurch Wärme von der Außenwandung an die Umgebung unter anderem durch freie Konvektion abgegeben werden kann.

Der Erfindung liegt die Idee zugrunde, dass die Sandwichkonstruktion die Innenwandung und die Außenwandung sowie mindestens zwei weitere Schichten aufweist, nämlich eine erste Hartschaumsicht aus der temperaturbeständigen Isolierplatte und die zweite Hartschaumschicht aus ausgehärtetem PUR-Schaum. Die mindestens eine (hoch)temperaturbeständige Isolierplatte hält einerseits einer hohen dauerhaften thermischen Belastung stand und andererseits senkt die (hoch)temperaturbeständige Isolierplatte die Temperatur bis zu der durch den PUR-Schaum gebildeten zweiten Hartschaumschicht ab, damit diese thermisch nicht abgebaut bzw. zersetzt wird. Die PUR-Schicht lässt sich durch Ausschäumen einfach ausbilden und bildet eine robuste Verbindung zwischen der hochtemperaturbeständigen Isolierplatte und der Außenwandung. Sowohl die erste als auch die zweite Hartschaumschicht weisen eine geringe Wärmeleitfähigkeit λ von ca. 0,02 - 0,03 W/mK auf, wodurch eine thermische Entkopplung der Innenwandung und der Außenwandung erfolgen kann.

Erfindungsgemäß ist es bei der Durchführung des Verfahrens vorteilhaft, wenn das Aufkleben der mindestens einen (hoch)temperaturbeständigen Isolierplatte mittels eines Zweikomponenten-Klebstoffes, kurz 2K-Klebstoffes, erfolgt, der vor einem Auflegen der mindestens einen hochtemperaturbeständigen Isolierplatte auf die Innenwandung auf die Innenwandung aufgetragen wird. Die mindestens eine temperaturbeständige Isolierplatte ist typischerweise aus einem Hartschaum mit Poren ausgebildet, so dass ein ressourcensparendes Auftragen des Klebstoffes seitens der Innenwandung realisierbar ist.

Nach Maßgabe einer bevorzugten Weiterbildung des Verfahrens ist die mindestens eine (hoch)temperaturbeständige Isolierplatte aus einem Hartschaum, insbesondere aus einem Polyisocyanurat-Hartschaum (PIR-Hartschaum), mit einer Temperaturbeständigkeit von mehr als 180 °C durch Abtrennen aus einem ausgehärteten und geschäumten Block gebildet. Polyisocyanurate haben eine besonders hohe Temperaturbeständigkeit von bis zu 400 °C, ohne dass eine thermische Zersetzung auftritt. Polyisocyanurat-Hartschaum hat eine geringe Wärmeleitfähigkeit λ von ca. 0,02 - 0,03 W/mK. Eine geringe Wärmeleitfähigkeit bzw. ein hoher Wärmeleitwiderstand führt zu einer Temperaturabsenkung in der Isolierplatte, damit in der zweiten Hartschaumschicht ein für herkömmliche PUR-Schäume erträgliches Temperaturniveau vorliegt, bei dem keine thermische Zersetzung auftritt.

Bei der Durchführung des Verfahrens hat es sich als vorteilhaft erwiesen, dass mehrere hochtemperaturbeständige Isolierplatten durch Fugen benachbart auf der Innenwandung aufgeklebt werden. Bevorzugt werden die Fugen mit einem temperaturbeständigen Klebstoff oder einem temperaturbeständigen Klebeband auf der von der Innenwandung abgewandten Seite verschlossen. Die hochtemperaturbeständigen Isolierplatten können beispielsweise zur Bildung eines Winkels über eine Kante mittels einer Fuge benachbart angeordnet sein, wobei durch das Verschließen der Fugen beim Ausschäumen das Eindringen des PUR-Schaums verhindert wird.

Das Ausschäumen des Hohlraums erfolgt bevorzugt mittels eines 2K-PUR-Schaums, der im Vergleich zu 1K-PUR-Schaum höhere Festigkeiten aufweist und schneller und gleichmäßiger aushärtet.

Nach Maßgabe einer Weiterbildung des Verfahrens kann die Innenwandung und/oder die Außenwandung aus einem Edelstahl hergestellt sein. Insbesondere hat sich Edelstahl als Werkstoff der Wahl für die Innenwandung erwiesen, da dieser eine thermisch, chemisch und mechanisch beständige Oberfläche aufweist und das Ausbilden einer widerstandsfähigen Klebeverbindung zwischen der Innenwandung und der temperaturbeständigen Isolierplatte ermöglicht.

Bei der Positionierung der Außenwandung zu der Innenwandung sollte der Abstand zwischen der Außenwandung und der auf der Innenwandung angeordneten temperaturbeständigen Isolierplatte nicht weniger als 15mm, vorzugsweise mehr als 20mm, und nicht mehr als 300mm betragen. Dieser Abstand zur Bildung des Hohlraums ist notwendig, damit beim Ausschäumen mit dem PUR-Schaum in der dünnflüssigen Phase der Hohlraum vollständig ausgefüllt werden kann und vollflächig die Außenwandung mit der temperaturbeständigen Isolierplatte zur Bildung der stabilen Sandwichkonstruktion verbinden kann.

Ein weiterer Aspekt der vorliegenden Erfindung betrifft eine Sandwichkonstruktion, aufweisend eine Innenwandung und eine Außenwandung und mindestens zwei Hartschaumschichten dazwischen, wobei die erste Hartschaumschicht aus mindestens einer temperaturbeständigen Isolierplatte, vorzugsweise aus PIR, und die zweite Hartschaumschicht aus einem ausgehärteten PUR-Schaum gebildet ist.

Ein dritter Aspekt der vorliegenden Erfindung betrifft einen Klimaschrank für den Hochtemperaturbereich, aufweisend wenigstens ein eine Tür aufweisendes Gehäuse mit einem Innenraum, der durch die wenigstens eine Tür verschließbar ist. Erfindungsgemäß ist vorgesehen, dass das Gehäuse aus einer Sandwichkonstruktion gebildet ist, die eine dem Innenraum zugewandte Innenwandung und eine Außenwandung aufweist, wobei auf der von dem Innenraum abgewandten Seite der Innenwandung mindestens eine hochtemperaturbeständige Isolierplatte mittels einer Klebstoffschicht gehalten ist und wobei die hochtemperaturbeständige Isolierplatte durch eine zweite Hartschaumschicht aus geschäumten PUR-Schaum mit der Außenwandung stoffschlüssig verbunden ist. Durch die Sandwichkonstruktion des Gehäuses kann einerseits eine hohe Stabilität des Gehäuses erreicht und andererseits eine hochwirksame thermische Isolation des Innenraums bereitgestellt werden, die eine bestmögliche thermische Entkopplung des Innenraums ermöglicht.

Gemäß einer vorteilhaften Ausgestaltung der vorliegenden Erfindung ist die Klebstoffschicht aus einem temperaturbeständigen 2K-Klebstoff gebildet. Der 2K-Klebstoff kann bevorzugt ein Epoxid-, Polyurethan-, o.Ä. Kleber sein, der eine hohe Festigkeit aufweist und gleichmäßig und schnell aushärtet.

Weiterhin hat es sich als vorteilhaft erwiesen, wenn die hochtemperaturbeständige Isolierplatte aus einem ausreagierten Hartschaum, insbesondere einem Polyisocyanurate (PIR), mit einer Temperaturbeständigkeit von mehr als 180°C, vorzugsweise bis zu 400°C, gebildet ist. Insbesondere Polyisocyanurate weisen eine geringe Wärmeleitfähigkeit λ von ca. 0,02 - 0,03 W/mK auf, wodurch aus dem resultierenden Wärmeleitwiderstand eine Temperaturabsenkung auf ein für die zweite Hartschaumschicht aus einem PUR-Schaum ertragbares Temperaturniveau T von T ≤ 120°C erfolgt.

Darüber hinaus wird es gemäß einer weiteren Maßgabe der vorliegenden Erfindung bevorzugt, wenn zwischen zwei benachbarten temperaturbeständigen Isolierplatten eine Fuge angeordnet ist. Beim Anordnen der hochtemperaturbeständigen Isolierplatten auf der Innenwandung bildet sich sowohl zwischen zwei auf Stoß liegenden Isolierplatten als auch über Kanten angeordneten Isolierplatten jeweils eine Fuge aus. Bevorzugt wird diese Fuge zumindest teilweise mit einem temperaturbeständigen Klebstoff von der der Außenwandung zugewandten Seite aufgefüllt oder die der Außenwandung zugewandten Seite ist mit einem temperaturbeständigen Klebeband verschlossen. Durch das Auffüllen oder Verschließen der Fugen wird beim Ausschäumen des Hohlraums verhindert, dass der PUR-Schaum in die Fuge eindringt und bei einer späteren Verwendung des Klimaschrankes thermisch zersetzt wird und dann Wärmebrücken ausbildet werden können.

Die zweite Hartschaumschicht wird bevorzugt durch Ausschäumen und Aushärten eines 2K-PUR-Schaum gebildet. 2K-PUR-Schäume haben eine hohe Festigkeit und bilden eine stabile Verbindung aus. Weiterhin härtet der 2K-PUR-Schaum schnell und gleichmäßig aus.

Darüber hinaus kann es bevorzugt sein, wenn die Innenwandung und/oder die Außenwandung aus Edelstahl gebildet sind bzw. ist. Insbesondere ist es bevorzugt, wenn die Innenwandung aus einem Edelstahl gebildet ist, da dieser sowohl thermisch, als auch chemisch, als auch mechanisch widerstandsfähig ist.

Auch hat es sich als vorteilhaft erwiesen, wenn die geschäumte PUR-Schaumschicht eine Schichtdicke von mindestens 15 mm, vorzugsweise mehr als 20mm, und nicht mehr als 300 mm aufweist. Bei einer Schichtdicke von ca. 20 mm ist sichergestellt, dass beim Ausschäumen des Hohlraums zwischen der temperaturbeständigen Isolationsplatte und der Außenwandung der PUR-Schaum in der dünnflüssigen Phase den Hohlraum vollständig durchfließt, bevor die Aushärtung des PUR-Schaums erfolgt.

Nachfolgend wird unter Bezugnahme auf die begleitenden Zeichnungen ein Ausführungsbeispiel eines erfindungsgemäßen Klimaschranks mit einem Gehäuse, das aus einer Sandwichkonstruktion gebildet ist, im Detail erläutert. Es zeigen:
- Figur 1: eine stark vereinfachte Schnittdarstellung durch ein Gehäuse eines Klimaschranks, und
- Figur 2: ein stark vereinfachtes Blockschaltbild eines Herstellungsverfahrens einer Sandwichkonstruktion für das Gehäuse des Klimaschranks.

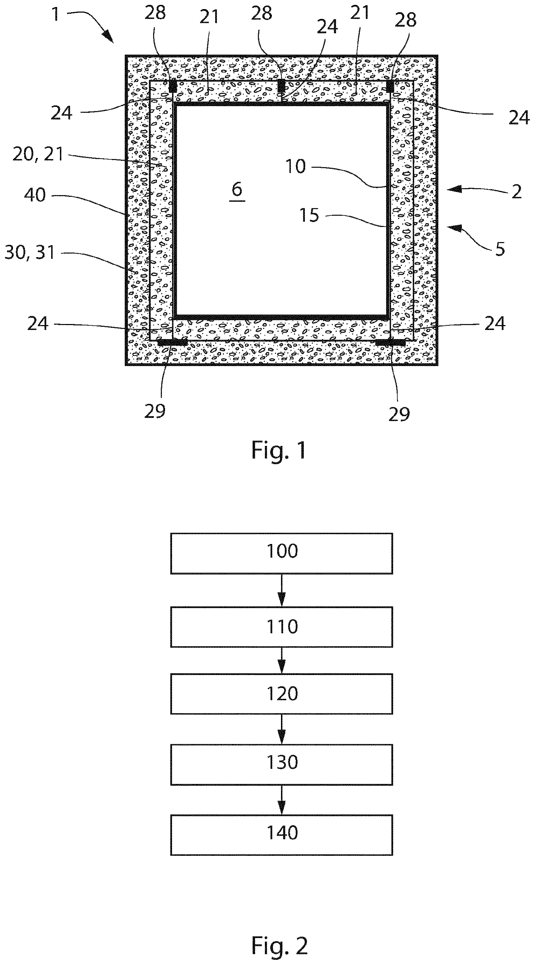

Figur 1 zeigt eine stark vereinfachte Schnittdarstellung eines Klimaschranks 1 mit einem Gehäuse 5, dessen Wandung aus einer Sandwichkonstruktion 2 gebildet ist. Das Gehäuse 5 weist wenigstens eine (nicht dargestellte) Tür auf, durch die ein durch das Gehäuse 5 umschlossener Innenraum 6 zugänglich ist.

Der Klimaschrank 1 kann ein Konstantklimaschrank im Hochtemperaturbereich sein, der ausgebildet ist, in dem Innenraum 6 eine Temperatur in einem Bereich von -10° bis 350 °C bzw. ca. 263 K bis ca. 623K für einen Langzeitbetrieb einzustellen.

Das Gehäuse 5 ist aus der Sandwichkonstruktion 2 gebildet, aufweisend eine dem Innenraum 6 zugewandte Innenwandung 10, eine Klebstoffschicht 15, eine erste (hoch)temperaturbeständige Hartschaumschicht 20, eine zweite Hartschaumschicht 30 und eine Außenwandung 40.

Die hochtemperaturbeständige erste Hartschaumschicht 20 ist aus einem Hartschaum mit einer Temperaturbeständigkeit von über 300°C, vorzugsweise bis zu 400 °C, hergestellt. Die erste Hartschaumschicht 20 kann aus einem PIR-Hartschaum (Polyisocyanurat-Hartschaum) ausgebildet sein. Der PIR-Hartschaum kann zunächst blockweise geschäumt werden und anschließend können durch Schneiden, Sägen, Fräsen o.Ä. hochtemperaturbeständige Isolierplatten 21 abtrennt werden, die die erste Hartschaumschicht 20 bilden.

Die zweite Hartschaumschicht 30 weist eine geringere Temperaturbeständigkeit als die erste Hartschaumschicht 20 von bis zu 120°C auf und ist aus einem PUR-Schaum (Polyurethan-Schaum) gebildet.

Die Innenwandung 10 kann aus Edelstahl hergestellt sein und ist mittels einer Klebstoffschicht 15 mit der ersten Hartschaumschicht 20 verbunden. Die zweite Hartschaumschicht 30 verbindet die erste Hartschaumschicht 20 mit der Außenwandung 40.

Die Dicken der ersten Hartschaumsicht 20 und der zweiten Hartschaumschicht 30 sind derart zu wählen, dass über die Dicke der ersten Hartschaumschicht 20 eine Temperaturabsenkung bis zur zweiten Hartschaumschicht 30 erfolgt, die so groß ist, dass das Temperaturniveau auf der dem Innenraum 6 zugewandten Seite der zweiten Hartschaumschicht 30 kleiner ist als die Temperaturbeständigkeit des verwendeten ausgehärteten PUR-Schaums 31.

Da sowohl der für die erste Hartschaumschicht 20 als auch der für die zweite Hartschaumschicht 30 verwendete Werkstoff jeweils eine Wärmeleitfähigkeit λ von ca. 0,02 - 0,03 W/mK aufweist, ist vorzugsweise die Dicke der ersten Hartschaumschicht 20 mindestens doppelt so dick wie die zweite Hartschaumschicht 30 zu wählen.

Figur 2 zeigt einen schematischen Ablauf eines Verfahrens zur Ausbildung der thermisch isolierenden Sandwichkonstruktion 2, wobei zunächst die Innenwandung 10 in einem Verfahrensschritt 100 bereitgestellt wird.

Die Innenwandung 10 kann aus einem Edelstahl hergestellt sein und kann quaderförmig zur Ausbildung des Innenraums 6 ausgebildet sein.

Nach dem Bereitstellen der Innenwandung können eine oder mehrere hochtemperaturbeständige Isolierplatten 21 aus einem bis zu 400°C temperaturbeständigen PIR-Hartschaum (Polyisocyanurat-Hartschaum), beispielsweise durch ein Abtrennen oder Ablängen einer Platte aus einem zuvor geschäumten Block, bereitgestellt werden. Um die mindestens eine hochtemperaturbeständigen Isolierplatte 21 mit der Innenwandung 10 zu verbinden, wird in einem Verfahrensschritt 110 zunächst eine Klebstoffschicht 15 flächig auf die Innenwandung 10 aufgetragen. Die Klebstoffschicht 15 wird aus einem hochtemperaturbeständigen Klebstoff hergestellt, der beispielsweise ein 2K-Kleber sein kann, der sich durch eine hohe Festigkeit und ein schnelles und homogenes Aushärten auszeichnet.

Anschließend werden in einem nächsten Verfahrensschritt 120 zum Verkleben die temperaturbeständigen Isolierplatten 21 auf eine Klebstoffschicht 15 auf der Innenwandung 10 auf Stoß aufgelegt und zwar derart, dass näherungsweise die vollständige Innenwandung 10 bedeckt ist.

Unter Bezug auf die Figur 1 ist ersichtlich, dass an den Kanten der im Querschnitt quaderförmigen Innenwandung 10 zwischen benachbarten Isolierplatten 21 kleine Fugen 24 oder Spalte angeordnet sind, welche in einem (nicht dargestellten) Verfahrensschritt durch ein ganz oder teilweises Auf- oder Verfüllen mittels eines hochtemperaturbeständigen Klebstoffes 28 auf der von der Innenwandung 10 abgewandten Seite verschlossen werden können. In Figur 1 sind auf einer Oberseite der Innenwandung zwei Isolierplatten 21 angeordnet, wobei die Fuge 24 an den benachbarten Seitenkanten mit Klebstoff 28 verschlossen sind. Alternativ kann - wie auf einer Unterseite in Figur 1 gezeigt, ein hochtemperaturbeständiges Klebeband 29 die von der Innenwandung 10 abgewandte Seite der Fuge 24 verschließen.

In einem folgenden Verfahrensschritt 130 wird die zuvor gebildete Einheit aus der Innenwandung 10, der Klebstoffschicht 15 und der hochtemperaturbeständigen Isolierplatten 21 auf einer zuvor bereitgestellten, vorzugsweise ebenfalls quaderförmigen, Außenwandung 40 positioniert und zwar derart, dass zwischen den hochtemperaturbeständigen Isolierplatten 21 und der Außenwandung 40 ein Hohlraum mit einem möglichst gleichmäßigen Abstand zwischen den Isolierplatte 21 und der Außenwandung 40 ausgebildet ist.

Um die Außenwandung 40 mit der zuvor gebildeten Einheit zu verbinden, wird in einem Verfahrensschritt 140 in den Hohlraum ein PUR-Schaum eingebracht bzw. der Hohlraum wird mit dem PUR-Schau ausgeschäumt. Damit der PUR-Schaum die zuvor gebildete Einheit vollständig benetzt, sollte der Hohlraum bzw. die nun zu bildende zweite Hartschaumschicht 30 eine Dicke von ca. 20mm aufweisen. Bevorzugt ist der PUR-Schaum ein 2K-Schaum, der in der dünnflüssigen Phase den Hohlraum bestmöglich durchfließt und anschließend zügig und gleichmäßig zur zweiten Hartschaumschicht 30 aushärtet, die die Außenwandung 40 mit der Einheit zur Bildung der Sandwichkonstruktion 2 verbindet.

### Bezugszeichenliste

- 1: Klimaschrank
- 2: Sandwichkonstruktion
- 5: Gehäuse
- 6: Innenraum

- 10: Innenwandung
- 15: Klebstoffschicht
- 20: erste Hartschaummschicht
- 21: Isolierplatte
- 24: Fuge
- 28: Klebstoff
- 29: Klebeband
- 30: zweite Hartschaumschicht
- 31: PUR-Schaum
- 40: Außenwandung

- 100: Verfahrensschritt
- 110: Verfahrensschritt
- 120: Verfahrensschritt
- 130: Verfahrensschritt
- 140: Verfahrensschritt

## Patentansprüche

1. Verfahren zur Ausbildung einer thermisch isolierenden Sandwichkonstruktion (2) eines Gehäuses (5) eines Klimaschranks (1) für den Hochtemperaturbereich von 120°C bis 350°C, mit einer Innenwandung (10) und einer Außenwandung (40), aufweisend folgende Verfahrensschritte:
- Bereitstellen der Innenwandung (10),
- Aufkleben mindestens einer hochtemperaturbeständigen Isolierplatte (21) auf die Innenwandung (10),
- Positionieren der Außenwandung (40) zu der Innenwandung (10) derart, dass zwischen der Innenwandung (10) und der Außenwandung (40) die mindestens eine hochtemperaturbeständige Isolierplatte (21) und ein Hohlraum ausgebildet ist, und
- Ausschäumen des Hohlraums mit einem PUR-Schaum (31) zur Bildung einer die mindestens eine hochtemperaturbeständige Isolierplatte (21) und die Außenwandung (40) verbindenden zweiten Hartschaumschicht (30),
wobei mehrere hochtemperaturbeständige Isolierplatten (21) durch Fugen (24) benachbart auf der Innenwandung (10) aufgeklebt werden, und die Fugen (24) mit einem temperaturbeständigen Klebstoff (28) oder einem temperaturbeständigen Klebeband (29) auf der von der Innenwandung (10) abgewandten Seite verschlossen werden.

2. Verfahren nach Anspruch 1,
**gekennzeichnet dadurch, dass**
das Aufkleben der mindestens einen hochtemperaturbeständigen Isolierplatte (21) mittels eines 2K-Klebstoffes erfolgt, der vor einem Auflegen der hochtemperaturbeständigen Isolierplatte (21) auf die Innenwandung (10) auf die Innenwandung (10) aufgetragen wird.

3. Verfahren nach Anspruch 1 oder 2,
**gekennzeichnet dadurch, dass**
die mindestens eine hochtemperaturbeständige Isolierplatte (21) aus einem Hartschaum, insbesondere aus einem Polyisocyanurate (PIR), mit einer Temperaturbeständigkeit von mehr als 180°C durch Abtrennen der Isolierplatte (21) aus einem geschäumten Block gebildet wird.

4. Verfahren nach einem der Ansprüche 1 bis 3,
**gekennzeichnet dadurch, dass**
der Hohlraum mit einem 2K-PUR-Schaum (31) ausgeschäumt wird.

5. Verfahren nach einem der Ansprüche 1 bis 4,
**gekennzeichnet dadurch, dass**
die Innenwandung (10) und/oder die Außenwandung (40) aus Edelstahl hergestellt sind bzw. ist.

6. Verfahren nach einem der Ansprüche 1 bis 5,
**gekennzeichnet dadurch, dass**
eine Schichtdicke der zweiten Hartschaumschicht (30) nicht kleiner ist als 20mm und nicht größer ist als 300mm.

7. Sandwichkonstruktion (2) aufweisend eine Innenwandung (10) und eine Außenwandung (40), hergestellt mit einem Verfahren nach einem der Ansprüche 1 bis 6.

8. Klimaschrank (1) für den Hochtemperaturbereich, aufweisend wenigstens ein eine Tür aufweisendes Gehäuse (5) mit einem Innenraum (6), der durch die wenigstens eine Tür verschließbar ist,
wobei das Gehäuse (5) eine Sandwichkonstruktion (2) umfasst, die eine dem Innenraum (6) zugewandte Innenwandung (10) und eine Außenwandung (40) aufweist,
wobei auf der von dem Innenraum (6) abgewandten Seite der Innenwandung (10) mindestens eine hochtemperaturbeständige Isolierplatte (21) durch eine Klebstoffschicht (15) verbunden angeordnet ist,
wobei die hochtemperaturbeständige Isolierplatte (21) durch eine zweite Hartschaumschicht (30) aus geschäumtem PUR-Schaum (31) mit der Außenwandung (40) verbunden ist, und
wobei zwischen zwei benachbarten hochtemperaturbeständigen Isolierplatten (21) eine Fuge (24) angeordnet ist, und die Fuge (24) zumindest teilweise mit einem temperaturbeständigen Klebstoff (28) aufgefüllt oder auf der der Außenwandung (40) zugewandten Seite mit einem temperaturbeständigen Klebeband (29) verschlossen ist.

9. Klimaschrank (1) nach Anspruch 8,
**gekennzeichnet dadurch, dass**
die Klebstoffschicht (15) aus einem temperaturbeständigen 2K-Klebstoff gebildet ist.

10. Klimaschrank (1) nach einem der Ansprüche 8 oder 9,
**dadurch gekennzeichnet, dass**
die hochtemperaturbeständige Isolierplatte (21) aus einem ausreagierten Hartschaum, insbesondere einem Polyisocyanurate (PIR), mit einer Temperaturbeständigkeit von mehr als 120°C, gebildet ist.

11. Klimaschrank (1) nach einem der Ansprüche 8 bis 10,
**dadurch gekennzeichnet, dass**
die mindestens eine hochtemperaturbeständige Isolierplatte (21) mit einem 2K-PUR-Schaum mit der Außenwandung (40) verbunden ist.

12. Klimaschrank (1) nach einem der Ansprüche 8 bis 11,
**dadurch gekennzeichnet, dass**
die Innenwandung (10) und/oder die Außenwandung (40) aus Edelstahl gebildet sind bzw. ist.

13. Klimaschrank (1) nach einem der Ansprüche 8 bis 12,
**dadurch gekennzeichnet, dass**
die zweite Hartschaumschicht (30) eine Schichtdicke von mindestens 20mm und nicht mehr als 300mm aufweist.

## Claims

1. Method for implementing a thermally insulating sandwich construction (2) of a housing (5) of a climate chamber (1) for a high temperature region of 120° C to 350° C, having an inner walling (10) and an outer walling (40), comprising the following method steps:
- providing the inner walling (10),
- adhering at least one high temperature resistant insulating plate (21) to the inner walling (10),
- positioning the outer walling (40) with respect to the inner walling (10) such that the at least one high temperature resistant insulating plate (21) and a hollow space is implemented between the inner walling (10) and the outer walling (40), and
- filling the hollow space with a PUR foam (31) to form a second rigid foam layer (30) which attachs the at least one high temperature insulating plate (21) to the outer walling (40),
wherein numerous high temperature insulating plates (21) are contiguously adhered to the inner walling (10) through gaps (24), and the gaps (24) are closed with a temperature resistant adhesive (28) or a temperature resistant adhesive tape (29) on the side facing away from the inner walling (10).

2. Method in accordance with claim 1,
**characterized in that**
the adhesion of the at least one high temperature resistant insulating plate (21) is carried out using a 2K adhesive which is applied to the inner walling (10) before positioning the high temperature resistant insulating plate (21).

3. Method in accordance with claim 1 or 2,
**characterized in that**
the at least one high temperature resistant insulating plate (21) is formed from a rigid foam, in particular from a polyisocyanurate (PIR) having a temperature resistance of more than 180° C, by separating the insulating plate (21) from a foamed block.

4. Method in accordance with any of claims 1 to 3,
**characterized in that**
the hollow space is filled with a 2K PUR foam (31).

5. Method in accordance with any of claims 1 to 4,
**characterized in that**
the inner walling (10) and/or the outer walling (40) is(are) made of stainless steel.

6. Method in accordance with any of claims 1 to 5,
**characterized in that**
a layer thickness of the second rigid foam layer (30) is not smaller than 20 mm and not larger than 300 mm.

7. Sandwich construction (2) comprising an inner walling (10) and an outer walling (40) manufactured with a method in accordance with any of claims 1 to 6.

8. Climate chamber (1) for high temperature applications, comprising at least one housing (5), which comprises a door, and having an inner space (6), which can be closed with the at least one door,
wherein the housing (5) includes a sandwich construction (2) which comprises an inner walling (10) facing the inner space (6) and an outer walling (40),
wherein at least one high temperature resistant insulating plate (12) is arranged adhered, by means of an adhesive layer (15), to the side of the inner walling (10) which faces away from the inner space (6),
wherein the high temperature resistant insulating plate (21) is attached to the outer walling (40) by means of a second rigid foam layer (30) made of foamed PUR foam (31), and
wherein a gap (24) is arranged between two adjacent high temperature resistant insulating plates (21) and the gap (24) is at least partially filled with a temperature resistant adhesive (28) or is closed on the side facing the outer walling (40) using a temperature resistant adhesive tape (29).

9. Climate chamber (1) in accordance with claim 8,
**characterized in that**
the adhesive layer (15) is formed from a temperature resistant 2K adhesive.

10. Climate chamber (1) in accordance with either of claims 8 or 9,
**characterized in that**
the high temperature resistant insulating plate (21) is formed from a polyisocyanurate (PIR) having a temperature resistance of more than 120° C.

11. Climate chamber (1) in accordance with any of claims 8 to 10
**characterized in that**
the at least one high temperature resistant insulating plate (21) is attached to the outer walling (40) by means of a 2K PUR foam.

12. Climate chamber (1) in accordance with any of claims 8 to 11,
**characterized in that**
the inner walling (10) and/or the outer walling (40) is(are) formed from stainless steel.

13. Climate chamber (1) in accordance with any of claims 8 to 12,
**characterized in that**
the second rigid foam layer (30) comprises a layer thickness of at least 20 mm and not more than 300 mm.

## Revendications

1. Procédé pour réaliser une construction sandwich (2), thermo-isolante d'un boîtier (5) d'une armoire de climatisation (1) pour une plage de hautes températures de 120°C-350°C avec une paroi intérieure (10) et une paroi extérieure (40), comprenant les étapes suivantes consistant à :
- fournir la paroi intérieure (10),
- coller au moins une plaque isolante (21) résistant aux hautes températures sur la paroi intérieure (10),
- placer la paroi extérieure (40) par rapport à la paroi intérieure (10) pour avoir cette plaque isolante (21) résistant aux hautes températures entre la paroi intérieure (10) et la paroi extérieure (40) et développer une cavité, et
- remplir de mousse la cavité avec une mousse de PUR (31) pour former une seconde couche de mousse rigide (30) reliant cette plaque d'isolation résistant aux températures élevées (21) et la paroi extérieure (40), procédé selon lequel
- on colle avec des joints (24) plusieurs plaques isolantes (21) résistant aux hautes températures, de façon adjacente sur la paroi intérieure (10), et
- on ferme les joints (24) avec une colle (28) résistant aux température ou un ruban adhésif (29) résistant aux températures sur le côté opposé à la paroi intérieure (10).

2. Procédé selon la revendication 1,
**caractérisé en ce que**
le collage de cette plaque isolante (21) résistant aux hautes températures se fait avec un adhésif 2K appliqué sur la paroi intérieure (10) avant d'installer la plaque isolante (21) résistant aux hautes températures sur la paroi intérieure (10).

3. Procédé selon la revendication 1 ou 2,
**caractérisé en ce que**
cette plaque isolante (21) résistant aux hautes températures est en mousse rigide, notamment en polyisocyanurate (PIR) avec une tenue en température supérieure à 180°C, la plaque isolante (21) étant découpée dans un bloc expansé.

4. Procédé selon l'une des revendications 1 à 3,
**caractérisé en ce que**
on expanse une mousse de 2K-PUR (31) dans la cavité.

5. Procédé selon l'une des revendications 1 à 4,
**caractérisé en ce que**
on réalise la paroi intérieure (10) et/ou la paroi extérieure (40) en acier inoxydable.

6. Procédé selon l'une des revendications 1 à 5,
**caractérisé en ce que**
l'épaisseur de la seconde couche de mousse rigide (30) n'est pas inférieure à 20 mm et n'est pas supérieure à 300 mm.

7. Construction sandwich (2) comprenant une paroi intérieure (10) et une paroi extérieure (40), réalisée par le procédé selon l'une des revendications 1 à 6.

8. Armoire de climatisation (1) pour la plage de hautes températures comprenant au moins un boîtier (5) muni d'une porte, fermant un volume intérieur (6),
- le boîtier (5) comprenant une construction sandwich (2) ayant une paroi intérieure (10) tournée vers le volume intérieur (6) et une paroi extérieure (40),
- au moins une plaque isolante (21) résistant aux hautes températures et reliée par une couche de colle (15) sur le côté de la paroi intérieure (10) opposé au volume intérieur (6),
- la plaque isolante (21) résistant aux hautes températures est reliée à la paroi extérieure (40) par une seconde couche de mousse rigide (30) en mousse de PUR (31) expansée, et
- un joint (24) est prévu entre deux plaques isolantes (21) résistant aux hautes températures, voisines et le joint (24) est rempli au moins partiellement avec un adhésif (28) résistant aux températures ou est fermé par un ruban adhésif (29) résistant aux températures, sur le côté tourné vers la paroi extérieure (40).

9. Armoire de climatisation (1) selon la revendication 8,
**caractérisée en ce que**
la couche de colle (15) est une colle 2K résistant aux températures.

10. Armoire de climatisation (1) selon l'une des revendications 8 ou 9, **caractérisée en ce que**
la plaque isolante (21) résistant aux hautes températures est en mousse rigide ayant complètement réagi, notamment du polyisocyanurate (PIR), ayant une tenue en température supérieure à 120°C.

11. Armoire de climatisation (1) selon l'une des revendications 8 à 10, **caractérisée en ce que**
cette plaque isolante (21) résistant aux hautes températures est reliée par une mousse 2K-PUR à la paroi extérieure (40).

12. Armoire de climatisation (1) selon l'une des revendications 8 à 11, **caractérisée en ce que**
la paroi intérieure (10) et/ou la paroi extérieure (40) sont en acier inoxydable.

13. Armoire de climatisation (1) selon l'une des revendications 8 à 12, **caractérisée en ce que**
la seconde couche de mousse rigide (30) a une épaisseur de couche comprise entre au moins 20 mm et au plus 300 mm.
